## Europäisches Patentamt

## European Patent Office

## Office européen des brevets

(11) Veröffentlichungsnummer: **0 082 934**
**B1**

(12) # EUROPÄISCHE PATENTSCHRIFT

(45) Veröffentlichungstag der Patentschrift:
14.01.87

(21) Anmeldenummer: **82109687.2**

(22) Anmeldetag: **20.10.82**

(51) Int. Cl.⁴: **G 01 N 27/04,** G 01 N 27/12, G 01 N 27/22

(54) **Feuchtigkeitsfühler und Verfahren zu seiner Herstellung.**

(30) Priorität: **28.12.81 DE 3151630**

(43) Veröffentlichungstag der Anmeldung:
**06.07.83 Patentblatt 83/27**

(45) Bekanntmachung des Hinweises auf die Patenterteilung:
**14.01.87 Patentblatt 87/3**

(84) Benannte Vertragsstaaten:
**CH FR GB IT LI NL SE**

(56) Entgegenhaltungen:
**EP-A-0 043 001
DE-A-2 824 609
DE-B-2 938 434**

(73) Patentinhaber: **Endress u. Hauser GmbH u.Co.,
Hauptstrasse 1, D-7867 Maulburg (DE)**

(72) Erfinder: **Lüder, Ernst, Prof. Dr., Kaulbachweg 3a,
D-7000 Stuttgart 1 (DE)**
Erfinder: **Kallfass, Traugott, Dr., Gotenstrasse 7,
D-7141 Grossbottwar (DE)**
Erfinder: **Borgwardt, Christian, Wilhelm- Raabe-
Strasse 7, D-7000 Stuttgart 1 (DE)**

(74) Vertreter: **Leiser, Gottfried, Dipl.- Ing.,
Patentanwälte Prinz, Leiser, Bunke & Partner
Manzingerweg 7, D-8000 München 60 (DE)**

## Beschreibung

Die Erfindung betrifft einen Feuchtigkeitsfühler mit einem feuchtigkeitsunempfindlichen Substrat, einer feuchtigkeitsempfindlichen dünnen Schicht aus dem Oxid von low-density-Tantal, einer zwischen dem Substrat und der Tantaloxidschicht angeordneten Grundelektrode und mit einer an der Tantaloxidschicht angeordneten zweiten Elektrode.

Ein Feuchtigkeitsfühler dieser Art ist in der den Stand der Technik gemäß Art. 54,3 bildenden EP-A1 43 001 beschrieben. Bei den meisten in der EP-A1 43 001 beschriebenen Ausführungsbeispielen des Feuchtigkeitsfühlers ist eine der beiden Elektroden eine Grundelektrode, die zwischen dem Substrat und der Tantaloxidschicht angeordnet ist. Diese Grundelektrode ist in allen Fällen zusammen mit der Tantaloxidschicht dadurch gebildet, daß eine Schicht aus dem low-density-Tantal nur über einen Teil ihrer Dicke oxidiert wird, so daß unter der Tantaloxidschicht ein Teil des metallischen low-density-Tantals verbleibt, der die Grundelektrode bildet. Diese Art der Bildung der Grundelektrode ist bei dem in der EP-A1 43 001 angegebenen low-density-Tantal möglich, das einen spezifischen Widerstand aufweist, der Werte bis zu 40.000 µΩcm erreicht. Bei der diesem Widerstandswert entsprechenden Dichte und Porosität des low-density-Tantals ist eine gesteuerte Oxidation bis zu der gewünschten Tiefe möglich.

Inzwischen ist es jedoch gelungen, durch geeignete Wahl der Parameter beim Aufstäuben ("Sputtern" des lowdensity-Tantals Werte des spezifischen Widerstands zu erreichen, die bis zu 1 Ωcm und mehr betragen können. Ein low-density-Tantal mit diesem Widerstandswert ist so porös, daß die Tiefe der Oxidation, insbesondere wenn diese durch Anodisieren erfolgt, nicht mehr bis zu einer gewünschten Tiefe gesteuert werden kann; vielmehr oxidiert das low-density-Tantal über die ganze Schichtdicke gleichmäßig und gleichzeitig durch. Die in der EP-A1 43 001 angegebenen Herstellungsverfahren ergeben dann keine Grundelektrode mehr.

Der Erfindung liegt die Aufgabe zugrunde, den eingangs genannten Feuchtigkeitsfühler so weiterzubilden, daß er auch bei Bildung der Tantaloxidschicht aus sehr hochohmigem low-density-Tantal auf einfache Weise mit einer Grundelektrode ausgebildet werden kann, und ein Verfahren zur Herstellung des derart weitergebildeten Feuchtigkeitsfühlers anzugeben.

Der Feuchtigkeitsfühler nach der Erfindung ist dadurch gekennzeichnet, daß die Grundelektrode aus einem anodisch oxidierbaren Metall besteht, dessen Dichte größer als die Dichte des low-density-Tantals ist, aus dem die Tantaloxidschicht gebildet ist.

Das Verfahren zum Herstellen des Feuchtigkeitsfühlers besteht nach der Erfindung darin, daß auf das feuchtigkeitsunempfindliche Substrat nacheinander eine erste Schicht aus dem anodisch oxidierbaren Metall der Grundelektrode und eine zweite Schicht aus sehr hochohmigem low-density-Tantal aufgebracht werden, und daß anschließend bis in einen Teil der Schicht der Grundelektrode oxidiert wird.

Zu den anodisch oxidierbaren Metallen, die auch als Ventilmetalle bezeichnet werden, gehören insbesondere Tantal, Aluminium und Niob. Die Verwendung eines solchen Metalls für die Grundelektrode, jedoch mit einer größeren Dichte als für die low-density-Tantalschicht, aus der die feuchtigkeitsempfindliche Tantaloxidschicht gebildet wird, ergibt den Vorteil, daß mit den in der EP-A1 43 001 beschriebenen Verfahrensmaßnahmen die Tantaloxidschicht durch Oxidation (insbesondere anodische Oxidation) von sehr hochohmigem low-density-Tantal gebildet werden kann und dabei die Grundelektrode erhalten bleibt. Während die Oxidation des sehr hochohmigen low-density-Tantals über die ganze Schichtdicke gleichzeitig stattfindet, wird das Metall der Grundelektrode von der Oberfläche her fortschreitend oxidiert, wobei die Oxidationstiefe durch die Oxidationsparameter bestimmt ist. Auf diese Weise ist eine sichere Steuerung des Oxidationsvorgangs möglich, ohne daß die Grundelektrode verschwindet. Die sich aus dem Metall der Grundelektrode bildende Oxidschicht ergibt den zusätzlichen Vorteil, daß sie als Isolation gegenüber der erforderlichen Gegenelektrode dienen kann. Die Gegenelektrode kann daher (insbesondere in Form einer Deckelektrode) unmittelbar auf die oxidierte Struktur aufgebracht werden.

Besondere Vorteile ergeben sich, wenn als Metall für die Grundelektrode gleichfalls Tantal verwendet wird. Es ist dann nämlich möglich, die beiden Schichten praktisch in einem Arbeitsgang in der gleichen Anlage aufzustäuben, wobei lediglich die Sputter-Parameter zur Erzielung der gewünschten unterschiedlichen Dichten verschieden eingestellt werden.

Da die feuchtigkeitsempfindliche Schicht des erfindungsgemäßen Feuchtigkeitsfühlers aus außerordentlich porösem Tantaloxid hergestellt werden kann, weist dieser eine sehr große Empfindlichkeit auf.

Durch eine weitere Verbesserung ist es möglich, die Ansprechgeschwindigkeit des Feuchtigkeitsfühlers beträchtlich zu erhöhen, wenn er mit einer die Tantaloxidschicht teilweise bedeckenden Deckelektrode ausgestattet ist, die Ausschnitte aufweist, durch die das wasserdampfhaltige Medium in die feuchtigkeitsempfindliche Tantaloxidschicht eindringen kann. Für die Feuchtigkeitsmessung sind nämlich nur die zwischen den Elektroden liegenden Bereiche der Tantaloxidschicht aktiv; der Wasserdampf muß daher erst die unter den Ausschnitten liegenden inaktiven Bereiche durchdringen, um in die aktiven Bereiche zu gelangen. Erfindungsgemäß wird die Ansprechgeschwindigkeit des Feuchtigkeitsfühlers dadurch wesentlich erhöht, daß die unter den Ausschnitten liegenden inaktiven Bereiche der Tantaloxidschicht entfernt sind. Vorzugsweise werden die inaktiven Bereiche durch Plasmaätzung entfernt, wobei die Deckelektrode als Ätzmaske verwendet wird.

Vorteilhafte Ausgestaltungen des Feuchtigkeitsfühlers sowie des Verfahrens zu seiner Herstellung sind in den abhängigen Ansprüchen gekennzeichnet.

Ein Ausführungsbeispiel des Feuchtigkeitsfühlers nach der Erfindung und eines Verfahrens zu seiner Herstellung werden anhand der Zeichnung erläutert. In der Zeichnung zeigt:

Fig. 1 ein Flußdiagramm der Verfahrensschritte eines bevorzugten Verfahrens zum Herstellen eines Feuchtigkeitsfühlers,

Fig. 2a bis 2l Schnittansichten verschiedener Fertigungsstadien, die bei der Herstellung des Feuchtigkeitsfühlers nach dem Verfahren von Fig. 1 entstehen, und

Fig. 3a bis 3e Draufsichten auf den Feuchtigkeitsfühler in verschiedenen Fertigungsstadien.

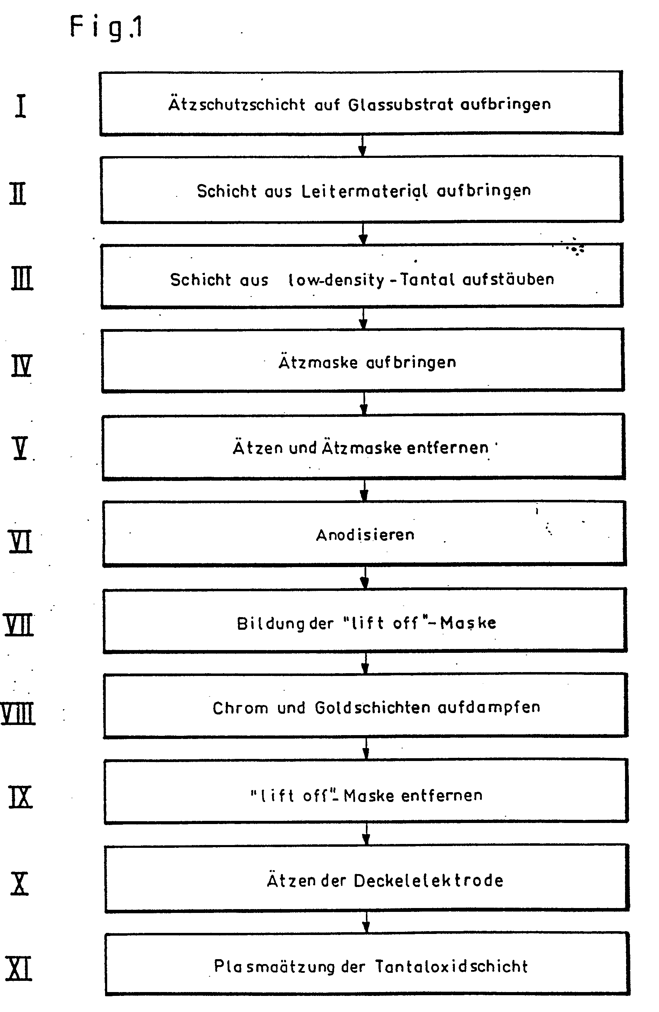

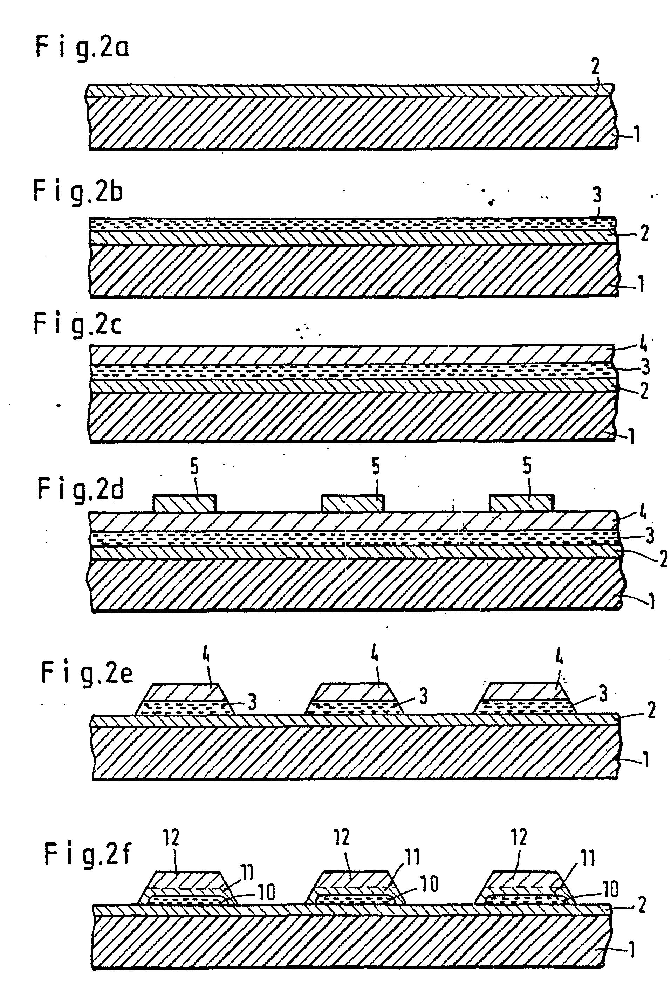

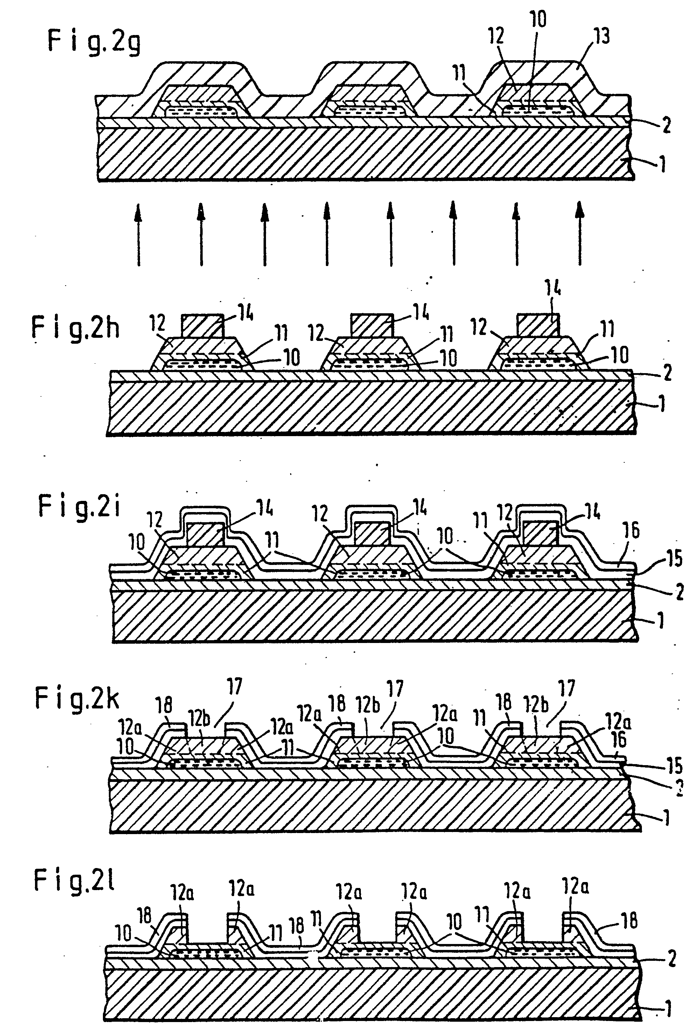

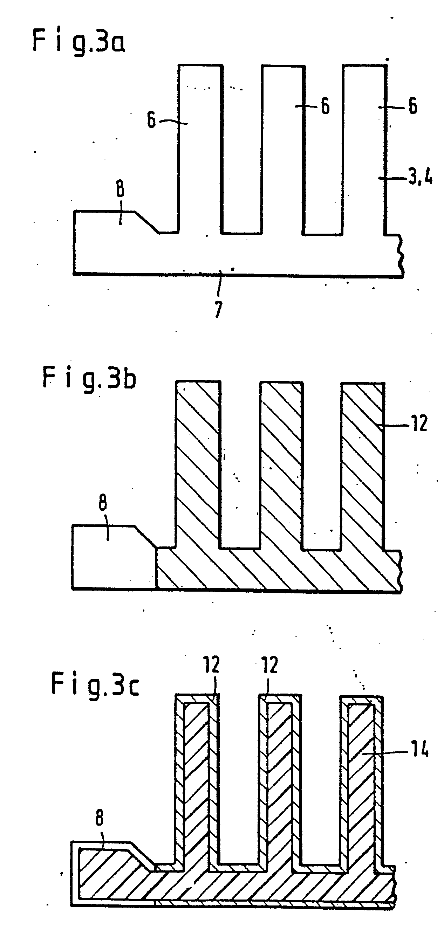

Anhand des Flußdiagramms von Fig. 1, der Schnittansichten von Fig. 2a bis Fig. 2l und der Draufsichten von Fig. 3a bis 3e soll die Herstellung eines bevorzugten Ausführungsbeispiels des Feuchtigkeitsfühlers beschrieben werden.

Im Verfahrensschritt I wird auf ein Substrat 1 aus Glas oder einem anderen lichtdurchlässigen Material eine Ätzschutzschicht 2 aufgebracht (Fig. 2a). Die Ätzschutzschicht 2 wird insbesondere benötigt, wenn im Verfahrensschritt V eine naßchemische Ätzung mit Flußsäure vorgenommen wird, denn Flußsäure greift Glas an. Die Ätzschutzschicht 2 kann aus Tantaloxid $Ta_2O_5$ bestehen und dadurch gebildet werden, daß auf das Glassubstrat 1, das beispielsweise eine Dicke von 0,6 mm hat, zunächst eine Tantalschicht mit einer Dicke von etwa 150 nm im Vakuum aufgestäubt und anschließend oxidiert wird. Die Oxidation kann in Luft bei einer Temperatur von etwa 450°C durchgeführt werden; sie sollte mindestens 5 Stunden, vorzugsweise aber bis zu etwa 16 Stunden dauern. Die dadurch erhaltene Tantaloxidschicht hat eine Dicke von etwa 300 nm.

Im Verfahrensschritt II wird auf die Ätzschutzschicht 2 eine Schicht 3 aus dem Leitermaterial aufgebracht, aus dem später die Grundelektrode des Feuchtigkeitsfühlers bestehen soll (Fig. 2b), und anschließend wird im Verfahrensschritt III auf die Schicht 3 eine Schicht 4 aus low-density-Tantal aufgebracht (Fig. 2c).

Eine besonders vorteilhafte Maßnahme zum Aufbringen der Schichten 3 und 4 besteht darin, daß die Schicht 3 gleichfalls aus Tantal besteht, und daß die beiden Schichten 3 und 4 durch Katodenzerstäubung (Sputtern) aufgebracht werden. Es ist dann möglich, die beiden Schichten in einem Arbeitsgang in der gleichen Anlage unter Verwendung des gleichen Ausgangsmaterials aufzubringen, wobei lediglich die Parameter beim Aufstäuben derart unterschiedlich eingestellt werden, daß die Schicht 3 aus Tantal mit einer wesentlich größeren Dichte als die Schicht 4 gebildet wird.

Beispielsweise kann die Schicht 3 aus massivem Tantal in der α-Modifikation oder in der ß-Modifikation bestehen. Tantal der α-Modifikation hat bekanntlich eine Dichte von 15,6 $g/cm^3$ und einen spezifischen Widerstand von 25 bis 50 μΩcm, und Tantal der ß-Modifikation hat eine Dichte von 15,9 $g/cm^3$ und einen spezifischen Widerstand von 180 bis 220 μΩcm. Diese Werte unterscheiden sich nicht wesentlich von den Eigenschaften von massivem Tantal (Bulk), das eine Dichte von 16,6 $g/cm^3$ und einen spezifischen Widerstand von 13 μΩcm hat.

Demgegenüber handelt es sich bei dem low-density-Tantal um eine besondere Modifikation von Tantal, die, wie die zuvor erwähnten α- und ß-Modifikationen, ebenfalls nur in dünnen Schichten vorliegt, sich aber von diesen und somit auch von Stück-Tantal hinsichtlich Struktur, Dichte und spezifischem Widerstand wesentlich unterscheidet. Das low-density-Tantal entsteht unter bestimmten Bedingungen beim Aufstäuben (sputtern) von Tantal in dünnen Schichten, wobei sich als wesentlicher Parameter die Sputter-Spannung, d.h. die Beschleunigungsspannung der Argonionen herausgestellt hat. Mit abnehmender Sputter-Spannung wird die Struktur des Tantals in der dünnen Schicht zunehmend poröser, und dementsprechend sinkt die Dichte auf Werte, die 10 $g/cm^3$ und weniger betragen können, wobei der soezifische Widerstand sehr hohe Werte annimmt. Während in der EP-A1 43 001 angegeben ist, daß Werte bis zu 40.000 μΩcm erreicht werden können, ist es jetzt bereits gelungen, durch geeignete Wahl der Sputter-Paramter Schichten aus low-density-Tantal zu erzeugen, deren spezifischer Widerstand in der Größenordnung von 1 Ωcm liegt. Solche Tantalschichten haben eine sehr poröse Struktur und eine entsprechend geringe Dichte.

Für die in Fig. 2c dargestellte Struktur wird angestrebt, daß die Schicht 4 aus low-density-Tantal mit einer möglichst geringen Dichte und dementsprechend großem spezifischem Widerstand besteht, so daß das low-density-Tantal der Schicht 4 eine sehr poröse Struktur aufweist. Dagegen soll die Schicht 3 aus Tantal bestehen, dessen Dichte wesentlich größer als diejenige der Schicht 4 ist. Aus den zuvor erläuterten Gründen lassen sich diese unterschiedlichen Eigenschaften der Schichten 3 und 4 im Verlauf des gleichen Sputtervorgangs einfach durch Änderung der Sputter-Parameter erreichen. Hierfür gibt es mehrere Möglichkeiten:.

- Die Sputter-Parameter werden zunächst so eingestellt, daß die Schicht 3 aus Tantal der α-Modifikation oder der ß-Modifikation entsteht. Wenn die gewünschte Schichtdicke erreicht ist, werden die Sputter-Parameter so geändert, daß sich die Schicht 4 aus low-density-Tantal mit möglichst geringer Dichte bildet.

- Die Sputter-Parameter werden anfänglich zu eingestellt, daß sich die Schicht 3 aus low-density-Tantal bildet, jedoch noch mit einer verhältnismäßig großen Dichte, beispielsweise mit einem spezifischen Widerstand in der Größenordnung von 5000 µΩcm. Nach Erreichen der gewünschten Schichtdicke werden die Sputter-Parameter so verändert, daß sich die Schicht 4 aus low-density-Tantal von wesentlich geringerer Dichte bildet, beispielsweise mit einem spezifischen Widerstand in der Größenordnung von 1 Ωcm.

- Die Sputter-Parameter werden anfänglich so eingestellt, daß sich die Schicht 3 zunächst aus low-density-Tantal von verhältnismäßig großer Dichte, beispielsweise mit einem spezifischen Widerstand von 5000 µΩcm bildet. Während der Bildung der Schicht 3 werden die Sputter-Parameter kontinuierlich verändert, so daß die Dichte des Tantals in der Schicht 3 zunehmend geringer wird und der spezifische Widerstand dementsprechend zunehmend ansteigt. Wenn die Dichte und der spezifische Widerstand die für die Schicht 4 gewünschten Werte erreicht haben, werden die Sputter-Paramter nicht mehr weiter verändert, und die Schicht 4 wird in der gewünschten Dicke gebildet.

In der folgenden Beschreibung soll der Deutlichkeit wegen angenommen werden, daß die Schichten 3 und 4 nach einer der beiden zuerst genannten Maßnahmen aufgebracht sind, so daß eine deutliche Grenze zwischen den Schichten 3 und 4 erkennbar ist. Die Dicke der Schichten 3 und 4 kann in der Größenordnung von 100 bis 400 nm liegen. In der Zeichnung sind die Schichtdicken der Deutlichkeit weoen nicht maßstabsgerecht dargestellt.

Die Verfahrensschritte IV und V dienen der Formgebung der Grundelektrode und der feuchtigkeitsempfindlichen Schicht. Zu diesem Zweck wird im Verfahrensschritt IV auf die Schicht 4 eine Ätzmaske 5 aufgebracht. Dies kann in der üblichen Weise auf photolithographischem Weg erfolgen, indem die ganze Oberfläche mit einer Photolackschicht von 2 bis 3 µm Dicke bedeckt wird, der Photolack dann durch eine Schablone belichtet, entwickelt und gehärtet wird, und schließlich der nicht gehärtete Teil des Photolacks entfernt wird (Fig. 2d).

Im Verfahrensschritt V werden die nicht von der Ätzmaske 5 bedeckten Teile der Schichten 3 und 4 durch naßchemische Ätzung entfernt. Hierzu kann ein Gemisch aus Fluß- und Salpetersäure verwendet werden, das aus 2 Volumenteilen konz. $HNO_3$, 1 Volumenteil 48 % HF und 1 Volumenteil Wasser zusammengesetzt ist.

Nach dem Ätzen der Schichten 3 und 4 und dem Entfernen der Ätzmaske 5 ist die Struktur erhalten, die in Fig. 2e im Querschnitt und in Fig. 3a in Draufsicht dargestellt ist. Es handelt sich um eine Kammstruktur mit einer großen Anzahl von parallelen Zinken 6, die am einen Ende durch einen Längssteg 7 miteinander verbunden sind. Am einen Ende des Längsstegs 7 ist ein verbreiterter Ansatz 8 angeformt, der später den Elektrodenanschluß bildet. Der Deutlichkeit wegen sind in Fig. 3a nur wenige Zinken 6 gezeigt; in Wirklichkeit ist die Anzahl der Zinken sehr groß, so daß eine möglichst große Kantenlänge erreicht wird.

Im Verfahrensschritt VI wird die feuchtigkeitsempfindliche Schicht aus Tantaloxid $Ta_2O_5$ durch anodische Oxidation des low-density-Tantals der Schicht 4 gebildet. Da der Elektrodenanschluß 8 nicht oxidiert werden darf, wird er durch eine Oxidationsmaske abgedeckt. Die Oxidationsmaske kann wieder auf photolithographischem Wege unter Verwendung von Photolack in der zuvor angegebenen Weise gebildet werden, vorzugsweise mit einer Dicke von etwa 10 bis 20 µm.

Die Oxidation erfolgt beispielsweise durch Anodisieren in wäßrigem Elektrolyt. Hierfür kann beispielsweise eine 0,01 gew.%ige Zitronensäure verwendet werden, wobei die Schichten 3 und 4 an den Pluspol der Spannungsquelle gelegt werden. Nach dem Entfernen der Oxidationsmaske hat die Struktur das in den Figuren 2f und 3b dargestellte Aussehen.

Die Schnittansichten von Fig. 2e und 2f lassen erkennen, daß das sehr poröse low-density-Tantal der Schicht 4 vollkommen durchoxidiert ist, während die Schicht 3 nur bis zu einer gewissen Eindringtiefe oxidiert ist. In dem sehr porösen low-density-Tantal der Schicht 4 erfolgt nämlich die Oxidation praktisch sofort über die ganze Dicke der Schicht, so daß es insbesondere nicht möglich ist, die Oxidationstiefe durch die Oxidationsbedingungen zu steuern. In der Schicht 3 erfolgt dagegen die Oxidation in der üblichen Weise fortschreitend von außen nach innen in Abhängigkeit von der Stromdichte und der Anodisierungsspannung, so daß es durch die Einstellung dieser Größen möglich ist, die Oxidationstiefe zu steuern.

Die auf diese Weise gebildete Struktur enthält somit eine kammförmige metallische Grundelektrode 10, die aus dem verbleibenden metallischen Tantal der Schicht 3 besteht und elektrisch mit dem Elektrodenanschluß 8 verbunden ist, in welchem das metallische Tantal der ursprünglichen Schichten 3 und 4 noch vollständig erhalten ist. Die Grundelektrode 10 ist mit einer Tantaloxidschicht 11 bedeckt, die durch anodische Oxidation des dichteren Tantals der Schicht 3 entstanden ist. Auf der Tantaloxidschicht 11 sitzt eine Tantaloxidschicht 12, die durch die vollständige anodische Oxidation des low-density-Tantals der Schicht 4 entstanden ist. Die Tantaloxidschicht 12 bildet die eigentliche feuchtigkeitsempfindliche Schicht des Feuchtigkeitsfühlers. Da das Tantal der Schicht 4 außerordentlich porös war, hat auch die Tantaloxidschicht 12 eine sehr poröse Struktur, was zur Folge hat, daß sie besonders feuchteempfindlich ist, wobei sich sowohl die Dielektrizitätskonstante als auch der spezifische Widerstand in Abhängigkeit von der aufgenommenen Feuchtigkeit stark ändern. Dennoch weist dieses poröse Tantaloxid die gleiche elektrische Langzeitstabilität und chemische Beständigkeit wie normales Tantaloxid auf.

Die Verfahrensschritte VII bis IX dienen der Bildung der Deckelektrode nach der sogenannten "lift off"-Technik unter Verwendung einer zuvor aufgebrachten Maske.

Im Verfahrensschritt VII wird die "lift off"-Maske gebildet. Zu diesem Zweck wird die zuletzt erhaltene Kammstruktur (Figuren 2f und 3b) mit einer Photolackschicht 13 bedeckt, die anschließend durch das Glassubstrat 1 hindurch belichtet wird (Fig. 2g). Dabei bildet die zuvor erhaltene Kammstruktur aus der Grundelektrode 10 und den Oxidschichten 11 und 12 die Belichtungsmaske. Nach dem Entwickeln der Photolackschicht 13 werden die belichteten Teile entfernt, so daß nur die unbelichteten Teile als "lift off"-Maske 14 zurückbleiben (Figuren 2h und 3c). Die "lift off"-Maske 14 hat die Form der Kammstruktur, und sie bedeckt die Oxidschicht 12, mit Ausnahme eines schmalen Bereichs entlang den Kanten. Diese etwas geringere Breite der "lift off"-Maske 14 ist die Folge der Streuung des Lichtes an den Kanten der als Belichtungsmaske dienenden Kammstruktur.

Im Verfahrensschritt VIII werden auf die ganze Oberfläche der zuletzt erhaltenen Struktur die Metallschichten aufgedampft, aus denen die Deckelektrode gebildet werden soll. Als Leitermaterial für die Deckelektrode wird vorzugsweise Gold verwendet. Da aber Gold auf dem Tantaloxid schlecht haftet, wird zunächst auf die ganze Oberfläche eine Chromschicht 15 aufgedampft und diese anschließend durch Aufdampfen mit einer Goldschicht 16 bedeckt (Fig. 2i). Anstelle von Chrom kann für die Haftschicht auch Titan oder Tantal verwendet werden. Bei Verwendung von Tantal als Haftschicht empfiehlt es sich, zwischen die Tantalschicht und die Golschicht eine Chromschicht einzufügen. Die oberste Schicht der Deckelektrode kann auch aus Aluminium anstatt aus Gold bestehen.

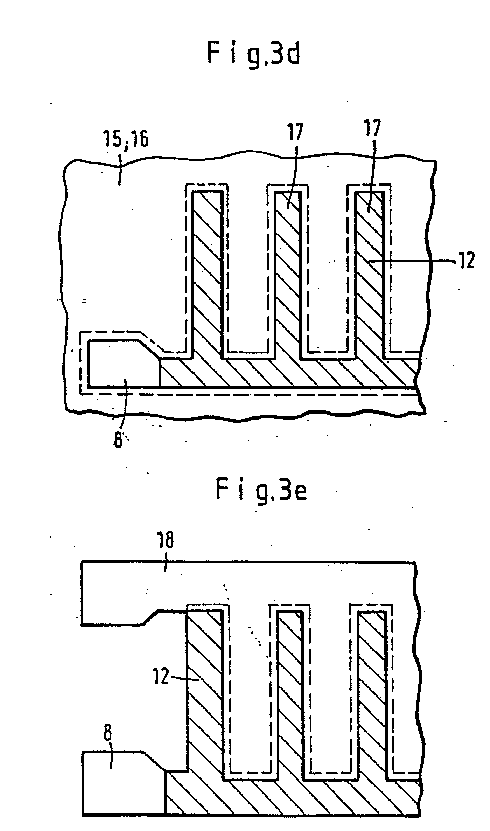

Im Verfahrensschritt IX wird die "lift off"-Maske aus Photolack samt dem darüberliegenden Chrom und Gold weggelöst. Das Lösungsmittel (Aceton) dringt an den dünn bedampften Kanten der Photolackmaske durch das Chrom und Gold hindurch. Die dadurch erhaltene Struktur ist in Fig. 2k im Schnitt und in Fig. 3d in Draufsicht gezeigt. Durch das Herauslösen der "lift off"-Maske ist ein kammförmiges Fenster 17 entstanden, in dem die Tantaloxidschicht 12 freiliegt. Da die Chrom- und Goldschichten 15, 16 noch die ganze übrige Oberfläche des Substrats bedecken, werden die nicht benötigten Abschnitte durch einen anschließenden Ätzvorgang im Verfahrensschritt X entfernt, damit der Deckelektrode 18 die endgültige Form erteilt wird, die in Fig. 3e in Draufsicht dargestellt ist. Das Ätzen kann in gleicher Weise wie zuvor bei der Bildung der Grundelektrode 10 in den Verfahrensschritten IV und V erfolgen, indem zunächst eine Ätzmaske durch Belichten und Entwickeln einer Photolackschicht gebildet wird, anschließend die Chrom- und Goldschichten an den nicht von der Ätzmaske bedeckten Stellen durch naßchemische Ätzung entfernt werden und schließlich die Ätzmaske beseitigt wird. Natürlich müssen Ätzmittel verwendet werden, die für Chrom und Gold geeignet sind.

Wie die Schnittansicht von Fig. 2k erkennen läßt, ist die Deckelektrode 18 durch die Tantaloxidschichten 11 und 12 von der Grundelektrode 10 vollkommen getrennt. Sie greift entlang den Kanten etwas über die Oberseite der feuchtigkeitsempfindlichen Tantaloxidschicht 12, die im übrigen in den vom Fenster 17 gebildeten Ausschnitten freiliegt. Durch das übergreifen entsteht zwischen der Grundelektrode 10 und der Deckelektrode 18 eine gewisse gegenseitige überlappung, die vorteilhaft für die Empfindlichkeit des Feuchtigkeitsfühlers ist, da der für die Feuchtigkeitsmessung aktive Teil der Tantaloxidschicht 12 durch die zwischen den Elektroden 10 und 18 liegenden Bereiche gebildet ist, die in Fig. 2k mit 12a bezeichnet sind.

Die Deckelektrode 18 kann natürlich auch auf andere Weise gebildet werden; beispielsweise könnte das Fenster 17 auch bei der Formgebung der Deckelektrode im Verfahrensschritt X entstehen, so daß die Verfahrensschritte VIII und IX entfallen würden. Das beschriebene "lift off"-Verfahren mit Bildung der "lift off"-Maske durch "Hinterbelichtung" durch das Glassubstrat 1 hindurch ergibt jedoch wesentliche Vorteile:

- Da die Kammstruktur der Grundelektrode selbst die Belichtungsmaske bildet, entfällt die Notwendigkeit einer besonderen, genau zu justierenden Belichtungsmaske. Es ist zu beachten, daß die Genauigkeitsanforderungen bei der Bildung der Kammstruktur der Deckelektrode wesentlich größer sind als bei der Formung des äußeren Umrisses. Das angewendete Verfahren ergibt eine Selbstjustierung der Lage der Deckelektrode in bezug auf die Lage der Grundelektrode und der Oxidschichten.

- Der gewünschte Grad der gegenseitigen Überlappung von Grundelektrode und Deckelektrode ist durch die Dauer der Hinterbelichtung steuerbar. Je größer die Belichtungszeit ist, umso größer wird der Grad der überlappung.

Die in den Figuren 2k und 3e dargestellte Anordnung bildet bereits einen funktionsfähigen Feuchtigkeitsfühler. Durch eine weitere Formgebung im Verfahrensschritt XI wird jedoch die Ansprechgeschwindigkeit des Feuchtigkeitsfühlers beträchtlich vergrößert.

Die Ansprechgeschwindigkeit des Feuchtigkeitsfühlers ist bestimmt durch die Zeit, die der Wasserdampf braucht, um in die aktiven Bereiche 12a (Fig. 2k) zu gelangen. Er muß dabei die inaktiven Bereiche 12b durchdringen, die unter den vom Fenster 17 gebildeten Ausschnitten liegen.

Durch Herausätzen der inaktiven Bereiche 12b der Tantaloxidschicht 12 im Verfahrensschritt XI wird die Ansprechzeit des Feuchtigkeitsfühlers erheblich verkürzt. Als Ätzverfahren eignet sich eine Plasma-Ätzung in $CF_4$ mit $O_2$-Zusatz. Wenn die oberste Schicht der Deckelektrode 18 aus Gold oder Aluminium besteht, kann die Deckelektrode 18 selbst als Ätzmaske dienen, da diese Metalle in dem zuvor genannten Plasma eine sehr geringe Ätzrate aufweisen. Es ist dann keine besondere Ätzmaske erforderlich.

Nach dem Ätzen hat der endgültige Feuchtigkeitsfühler die in Fig. 21 dargestellte Struktur. Der Wasserdampf kann unmittelbar in die aktiven Bereiche 12a der Tantaloxidschicht 12 eindringen. Mit einem auf diese Weise ausgebildeten Feuchtigkeitsfühler konnte beispielsweise bei einem Feuchtigkeitssprung von 5 auf 95 % relativer Feuchtigkeit der 95%-Wert des Ausgangssignals des Feuchtigkeitsfühlers in weniger als 1 Sekunde erreicht werden.

Bei dem zuvor beschriebenen Herstellungsverfahren können natürlich zwischen einzelnen Verfahrensstufen sowie am Schluß verschiedene Zwischen- oder Nachbehandlungen vorgenommen werden, um die Eigenschaften des Feuchtigkeitsfühlers zu verbessern. Als besonders günstig hat sich eine Reinigung der Oberfläche der Tantaloxidschicht durch Sputterätzen und eine Temperung bei einer Temperatur von bis zu 400°C erwiesen.

Die Verwendung einer Grundelektrode aus einem anodisch oxidierbaren Metall, das eine größere Dichte als das low-density-Tantal hat, aus dessen Oxid die feuchtigkeitsempfindliche Schicht gebildet wird, ist auch bei anderen Strukturen des Feuchtigkeitsfühlers möglich, beispielsweise bei allen in der EP-Al 43 001 beschriebenen Strukturen. Diese Maßnahme ist unabhängig von der Art, Form und Herstellung der zweiten Elektrode.

**Patentansprüche**

1. Feuchtigkeitsfühler mit einem feuchtigkeitsunempfindlichen Substrat, einer feuchtigkeitsempfindlichen dünnen Schicht aus dem Oxid von low-density-Tantal, einer zwischen dem Substrat und der Tantaloxidschicht angeordneten Grundelektrode und mit einer an der Tantaloxidschicht angeordneten zweiten Elektrode, dadurch gekennzeichnet, daß die Grundelektrode aus einem anodisch oxidierbaren Metall besteht, dessen Dichte größer als die Dichte des lowdensity-Tantals ist, aus dem die Tantaloxidschicht gebildet ist.

2. Feuchtigkeitsfühler nach Anspruch 1, dadurch gekennzeichnet, daß die Grundelektrode aus Tantal besteht.

3. Feuchtigkeitsfühler nach Anspruch 2, dadurch gekennzeichnet, daß die Grundelektrode aus einer auf das Substrat aufgebrachten dünnen Schicht aus Tantal der α- oder -β-Modifikation gebildet ist.

4. Feuchtigkeitsfühler nach Anspruch 2, dadurch gekennzeichnet, daß die Grundelektrode aus einer auf das Substrat aufgebrachten dünnen Schicht aus low-density-Tantal gebildet ist, dessen Dichte wesentlich größer als die Dichte des low-density-Tantals ist, aus dem die feuchtigkeitsempfindliche Tantaloxidschicht gebildet ist.

5. Feuchtigkeitsfühler nach Anspruch 4, dadurch gekennzeichnet, daß die Dichte des die Grundelektrode bildenden low-density-Tantals vom Substrat zur Tantaloxidschicht hin fortschreitend abnimmt.

6. Feuchtigkeitsfühler nach Anspruch 1, dadurch gekennzeichnet, daß die Grundelektrode aus Aluminium besteht.

7. Feuchtigkeitsfühler nach Anspruch 1, dadurch gekennzeichnet, daß die Grundelektrode aus Niob besteht.

8. Feuchtigkeitsfühler nach einem der Ansprüche 1 bis 7, dadurch gekennzeichnet, daß das anodisch oxidierbare Metall der Grundelektrode über einen Teil seiner Dicke oxidiert ist.

9. Feuchtigkeitsfühler nach einem der Ansprüche 1 bis 8, dadurch gekennzeichnet, daß die zweite Elektrode als Deckelektrode ausgebildet ist, die Ausschnitte aufweist, und daß unter den Ausschnitten die Tantaloxidschicht entfernt ist.

10. Feuchtigkeitsfühler nach Anspruch 9, dadurch gekennzeichnet, daß die Tantaloxidschicht durch Plasmaätzung entfernt ist.

11. Feuchtigkeitsfühler nach Anspruch 9 oder 10, dadurch gekennzeichnet, daß sich die Grundelektrode und die Deckelektrode überlappen.

12. Feuchtigkeitsfühler nach Anspruch 11, dadurch gekennzeichnet, daß die von der Grundelektrode und der Tantaloxidschicht gebildete Struktur die Form eines ersten Kammes hat, und daß die Deckelektrode die Form eines zweiten Kammes hat, dessen Zinken die Zwischenräume zwischen den Zinken des ersten Kammes und die Randbereiche der Zinken des ersten Kammes überdecken.

13. Verfahren zum Herstellen eines Feuchtigkeitsfühlers nach Anspruch 8, dadurch gekennzeichnet, daß auf das feuchtigkeitsunempfindliche Substrat nacheinander eine erste Schicht aus dem anodisch oxidierbaren Metall der Grundelektrode und eine zweite Schicht aus sehr hochohmigem low-density-Tantal aufgebracht werden, und daß anschließend bis in einen Teil der Schicht der Grundelektrode oxidiert wird.

14. Verfahren nach Anspruch 13, dadurch gekennzeichnet, daß anodisch oxidiert wird.

15. Verfahren nach Anspruch 13 oder 14, dadurch gekennzeichnet, daß die erste Schicht aus Tantal der α- oder β-Modifikation gebildet wird.

16. Verfahren nach Anspruch 13 oder 14, dadurch gekennzeichnet, daß die erste Schicht aus low-density-Tantal gebildet wird, dessen Dichte wesentlich größer als die Dichte des low-density-Tantals der zweiten Schicht ist.

17. Verfahren nach Anspruch 16, dadurch gekennzeichnet, daß die beiden low-density-Tantalschichten durch Aufstäuben (Sputtern) aufgebracht werden, und daß die unterschiedliche Dichte der Schichten durch Veränderung der Aufstäub-Parameter eingestellt wird.

18. Verfahren nach einem der Ansprüche 13 bis 17 zum Herstellen eines Feuchtigkeitsfühlers nach Anspruch 12 mit einem Glassubstrat, dadurch gekennzeichnet, daß nach der Bildung der Kammstruktur der Grundelektrode und der sie bedeckenden Tantaloxidschicht eine Photolackschicht aufgebracht wird, daß die Photolackschicht durch das Glassubstrat hindurch belichtet wird, daß die belichteten Teile der Photolackschicht entfernt werden, während die nicht belichteten Teile der Photolackschicht als "lift off'''"-Maske verbleiben, daß eine oder mehrere dünne Schichten aus den zur Bildung der Deckelektrode bestimmten Metallen aufgebracht werden, und daß die "lift off'''"-Maske mit den sie bedeckenden Teilen der Metallschichten entfernt wird.

19. Verfahren nach einem der Ansprüche 13 bis 18 zur Herstellung eines Feuchtigkeitsfühlers mit einer die Tantaloxidschicht teilweise bedeckenden Deckelektrode, die Ausschnitte aufweist, durch die das wasserdampfhaltige Medium in die feuchtigkeitsempfindliche Tantaloxidschicht eindringen kann, dadurch gekennzeichnet, daß die unter den Ausschnitten liegende Tantaloxidschicht durch Plasmaätzung entfernt wird, und daß dabei die Deckelektrode als Ätzmaske verwendet wird.

## Claims

1. A moisture sensor comprising a moisture-insensitive substrate, a moisture-sensitive thin layer from the oxide of low-density tantalum a base electrode disposed between the substrate and the tantalum oxide layer and a second electrode disposed at the tantalum oxide layer, characterized in that the base electrode consists of an anodically oxidizable metal the density of which is higher than the density of the low-density tantalum from which the tantalum oxide layer is formed.

2. Moisture sensor according to claim 1, characterized in that the base electrode consists of tantalum.

3. Moisture sensor according to claim 2, characterized in that the base electrode is formed of a thin layer of tantalum of the α - or ß-modification applied on the substrate.

4. Moisture sensor according to claim 2, characterized in that the base electrode is formed of a thin layer of low-density tantalum applied on the substrate,the density of said low-density tantalum being substantially higher than the density of the low-density tantalum from which the moisture-sensitive tantalum oxide layer is formed.

5. Moisture sensor according to claim 4, characterized in that the density of the low-density tantalum forming the base electrode continuously decreases from the substrate to the tantalum oxide layer.

6. Moisture sensor according to claim 1, characterized in that the base electrode consists of aluminum.

7. Moisture sensor according to claim 1, characterized in that the base electrode consists of niobium.

8. Moisture sensor according to any one of claims 1 to 7, characterized in that the anodically oxidizable metal of the base electrode is oxidized through part of its thickness.

9. Moisture sensor according to any one of claims 1 to 8, characterized in that the second electrode is formed as a covering electrode having windows and in that the tantalum oxide layer is removed beneath the windows.

10. Moisture sensor according to claim 9, characterized in that the tantalum oxide layer has been removed by plasma etching.

11. Moisture sensor according to claim 9 or 10, characterized in that the base electrode and the covering electrode overlap each other.

12. Moisture sensor according to claim 11, characterized in that the structure formed by the base electrode and by the tantalum oxide layer has the shape of a first comb and that the covering electrode has the shape of a second comb whose teeth overlap the interstices between the teeth of the first comb and the marginal regions of the teeth of the first comb.

13. A method of manufacturing a moisture sensor according to claim 8, characterized in that onto the moisture-insensitive substrate a first layer of the anodically oxidizable metal of the base electrode and a second layer of extremely high-resistive low-density tantalum are sequentially applied and that thereafter the layers are oxidized up to a part of the base electrode layer.

14. Method according to claim 13, characterized in that the layers are oxidized anodically.

15. Method according to claim 13 or 14, characterized in that the first layer isformed of tantalum of the αor β-modification.

16. Method according to claim 13 or 14,characterized in that the first layer is formed of low-density tantalum whose density is substantially higher than the density of the low-density tantalum of the second layer.

17. Method according to claim 16, characterized in that the two low-density tantalum layers are applied by sputtering and that the different densities of the layers are produced by variations of the sputtering parameters.

18. Method according to any one of claims 13 to 17 for producing a moisture sensor according to claim 12 having a glass substrate, characterized in that after the formation of the comb structure of the base electrode and the tantalum oxide layer covering same, a photoresist layer is applied, that the photoresist layer is exposed through the glass substrate, that the exposed regions of the photoresist layer are removed, whereas the non-exposed regions of the photoresist layer remain as "lift-off" mask, that one or more thin layers of the metals contemplated for the formation of the covering electrode are applied and that the "lift-off"" mask is removed together with the portions of the metal layers covering it.

19. Method according to any one of claims 13 to 18 for producing a moisture sensor comprising a covering electrode partially covering the tantalum oxide layer and having windows through which the water vapor containing medium can penetrate into the moisture sensitive tantalum oxide layer, characterized in that the tantalum oxide layer disposed beneath the windows is removed by plasma etching, the covering electrode being used as etching mask.

**Revendications**

1. Détecteur d'humidité comprenant un substrat insensible à l'humidité, une mince couche sensible à l'humidité d'oxyde de tantale "low-density", une électrode de référence disposée entre le substrat et la couche d'oxyde de tantale et une deuxième électrode disposée contre la couche doxyde de tantale, caractérisé en ce que l'électrode de référence est constituée d'un métal oxydable par anodisation dont la densité est superieure à celle du tantale "low-density" dont est constituée la couche d'oxyde de tantale.

2. Détecteur d'humidité conforme à la revendication 1, caractérisé en ce que l'électrode de référence est en tantale.

3. Détecteur d'humidité conforme à la revendication 2, caractérisé en ce que l'électrode de référence est constituée d'une mince couche de tantale de variété α ou β déposée sur le substrat.

4. Détecteur d'humidité conforme à la revendication 2, caractérisé en ce que l'électrode de référence est constituée d'une couche mince de tantale "lowdensity" déposée sur le substrat, dont la densité est sensiblement supérieure à la densité du tantale "lowdensity" dont la couche d'oxyde de tantale sensible à l'humidité est constituée.

5. Détecteur d'humidité conforme à la revendication 4, caractérisé en ce que la densité du tantale "low-density" qui constitue l'électrode de reférence diminue progressivement du substrat vers la couche d'oxyde de tantale.

6. Détecteur d'humidité conforme à la revendication 1, caractérisé en ce que l'électrode de référence est en aluminium.

7. Détecteur d'humidité conforme à la revendication 1, caractérisé en ce que l'électrode de référence est en niobium.

8. Detecteur d'humidite conforme à l'une des revendications 1 à 7, caractérisé en ce que le métal oxydable par anodisation de l'électrode de référence est oxydé sur une partie de son épaisseur.

9. Detecteur d'humidite conforme à l'une des revendications 1 à 8, caractérisé en ce que la deuxième électrode est conçue en électrode de couverture présentant des découpes, et en ce que, sous les découpes, la couche d'oxyde de tantale est éliminée.

10. Détecteur d'humidité conforme à la revendication 9, caractérise en ce que la couche d'oxyde de tantale est éliminée par decapage au plasma.

11. Détecteur d'humidité conforme à la revendication 9 ou 10, caracterisé en ce que l'électrode de référence et l'électrode de couverture se recouvrent.

12. Détecteur d'humidité conforme à la revendication 11, caractérisé en ce que la structure réalisée à partir de l'électrode de reférence et de la couche d'oxyde de tantale présente la forme d'un premier peigne, et en ce que l'électrode de couverture présente la forme d'un deuxième peigne dont les dents recouvrent les intervalles entre les dents du premier peigne et les régions marginales des dents du premier peigne.

13. Procédé pour fabriquer un détecteur d'humidité conforme à la revendication 8, caractérise en ce qu'on dépose sur le substrat insensible à l'humidité, l'une après l'autre, une première couche constituée du métal oxydable par anodisation de l'electrode de référence et une deuxième couche de tantale "low-density" à valeur ohmique très élevée, et en ce qu'immédiatement après on oxyde une partie de la couche de l'électrode de référence.

14. Procédé conforme à la revendication 13, caractérisé en ce qu'on oxyde par anodisation.

15. Procédé conforme à l'une des revendications 13 ou 14, caractérisé en ce que la première couche est constituée de tantale de variété α ou β.

16. Procédé conforme à l'une des revendications 13 ou 14, caractérisé en ce que la première couche est constituée de tantale "low-density" dont la densité est sensiblement supérieure à la densité du tantale "lowdensity" de la deuxième couche.

17. Procédé conforme à la revendication 16, caractérisé en ce qu'on dépose les deux couches de tantale basse densité par saupoudrage (crépitement), et en ce qu'on règle la densité différenciée des couches en modifiant le paramètre de saupoudrage.

18. Procédé conforme à l'une des revendications 13 à 17 pour réaliser un détecteur d'humidité conforme à la revendication 12 et comprenant un substrat en verre, caractérisé en ce qu'après formation de la structure en peigne de l'électrode de référence et de la couche d'oxyde de tantale qui la recouvre, on dépose une couche de laque photosensible, en ce qu'on expose la couche de laque photosensible à travers le substrat en verre, en ce qu'on élimine les parties exposées de la couche de laque photosensible tandis que les parties non exposees de la couche de laque photosensible sont conservées en tant que masque "de décollage", en ce qu'on dépose une ou plusieurs couches minces constituées des métaux destinés à la réalisation de l'électrode de couverture et en ce qu'on élimine le masque de "décollage" avec les parties des couches de métal qui le recouvrent.

19. Procédé conforme à l'une des revendications 13 à 18 pour réaliser un détecteur d'humidité comprenant une électrode de couverture recouvrant partiellement la couche d'oxyde de tantale et présentant des découpes à travers lesquelles le milieu contenant de la vapeur d'eau peut s'infiltrer dans la couche d'oxyde de tantale sensible à l'humidité, caractérisé, en ce que la couche d'oxyde de tantale s'étendant sous les découpes est éliminée par décapage au plasma, et en ce que dans ce cas, l'électrode de couverture est utilisee en tant que masque de décapage.

# Fig.1

| | |
|---|---|
| I | Ätzschutzschicht auf Glassubstrat aufbringen |
| II | Schicht aus Leitermaterial aufbringen |
| III | Schicht aus low-density-Tantal aufstäuben |
| IV | Ätzmaske aufbringen |
| V | Ätzen und Ätzmaske entfernen |
| VI | Anodisieren |
| VII | Bildung der "lift off"-Maske |
| VIII | Chrom und Goldschichten aufdampfen |
| IX | "lift off"-Maske entfernen |
| X | Ätzen der Deckelelektrode |
| XI | Plasmaätzung der Tantaloxidschicht |

1

Fig.2a

Fig.2b

Fig.2c

Fig.2d

Fig.2e

Fig.2f

0 082 934

Fig.2g

Fig.2h

Fig.2i

Fig.2k

Fig.2l

5

# Fig.3a

6

6 6

3,4

8

7

# Fig.3b

12

8

# Fig.3c

12 12

14

8

# Fig.3d

# Fig.3e